# EUROPEAN PATENT SPECIFICATION

(11) **EP 3 339 002 B1**
(45) Date of publication and mention of the grant of the patent: **28.08.2019**
(21) Application number: 17197287.0
(22) Date of filing: 19.10.2017
(51) Int. Cl.: B29C 64/35, B33Y 40/00, B29C 64/118

(54) **FUSED FILAMENT FABRICATION MACHINE**
SCHMELZFADENSDRUCKER
MACHINE D'IMPRESSION PAR DÉPÔT DE FIL FONDU

(30) Priority: 21.12.2016 US 201662437114 P; 16.01.2017 US 201715407024
(43) Date of publication of application: 27.06.2018
(73) Proprietor: The Boeing Company, Chicago, IL 60606-1596 (US)
(72) Inventor: RUPEL, Keith Edwar, Chicago, IL Illinois 60606-1596 (US); PETERS, Garrett B., Chicago, IL Illinois 60606-1596 (US); TACKETT, Derrick E., Chicago, IL Illinois 60606-1596 (US)
(74) Representative: Witte, Weller & Partner Patentanwälte mbB

(56) References cited:
- WO-A1-2015/073367
- JP-A- 2015 063 099
- US-A1- 2014 034 214

## Description

### BACKGROUND

The present disclosure relates generally to fused filament fabrication (FFF) machines and methods of operation.

Fused filament fabrication is a 3D printing process that uses a continuous filament of a thermoplastic material fed through a moving, heated head assembly to form a workpiece. The media is heated to a molten state and forced out of a dispenser and deposited on the growing workpiece. The head assembly is moved, under a computer control build sequence, to define the printed shape of the workpiece. The workpiece includes the desired part and a sacrificial tower for the part. Usually the head assembly moves to deposit one horizontal layer at a time, moving in two dimensions to form the workpiece, before moving upwards or having the build platform holding the workpiece move downwards to begin a new layer.

However, known FFF machines are not without disadvantages. For instance, media and/or debris build-up on the dispenser tip needs to be periodically removed. Conventional FFF machines provide a tip wipe assembly used to clean the dispenser tip and the machine causes the head assembly to move to the tip wipe assembly at predetermined times. However, during the time that the head assembly is moving to the tip wipe assembly and back to the workpiece, the deposited material in the workpiece is cooled and the media in the dispenser, which is not moving through the dispenser, can be heated above the normal deposition temperature. Such material may be detrimentally affected by the excess heating. For example, the initial slug of media that is dispensed after the tip wipe may be more viscous and thus more easily dispensed, which may lead to a thinner filament at the location of the initial dispensing. When the material is deposited after the tip wipe process, the material in the workpiece and the material in the head assembly are at different temperatures and can yield a weaker bond at the interface between the materials. The media may be weakened or chemically altered due to the excess and/or prolonged heating in the head assembly leading to changes and possible local reduction in the properties of the material, such as the strength of the material. The filament on the workpiece at the break area may be physically altered, such as being partially set up, prior to the re-dispensing of the new media, forming a line of weakness at the interface between the old material and the new material. The final part may be subject to faults, property variability or other problems at the breaks in the corresponding layer(s) caused by the tip wipe process leading to lower average tensile strength characteristics for the parts. As such, the parts cannot be certified or need to be overdesigned, leading to higher cost, higher weight, and the like.

WO 2015/073367 A1 discloses an extruder or other similar tool head of a three-dimensional printer is slidably mounted along a feedpath of build material so that the extruder can move into and out of contact with a build surface according to whether build material is being extruded. The extruder may be spring-biased against the forward feedpath so that the extruder remains above the build surface in the absence of applied forces, and then moves downward into a position for extrusion when build material is fed into the extruder. In another aspect, modular tool heads are disclosed that can be automatically coupled to and removed from the three-dimensional printer by a suitable robotics system. A tool crib may be provided to store multiple tool heads while not in use.

### SUMMARY

In accordance with one embodiment, a fused filament fabrication (FFF) machine is provided including a cabinet defining a build chamber for building a part and a sacrificial tower for the part at a build location. A head assembly is provided in the cabinet for dispensing media at the build location during a build process. The head assembly has a filament dispenser for dispensing the media through a liquefier tip of the filament dispenser. A tip wipe assembly is provided in the cabinet remote from the build location. A controller is operably coupled to the head assembly to control the position of the head assembly and dispensing of the media during the build process. The controller periodically moves the head assembly away from the build location to the tip wipe assembly to clean the liquefier tip at the tip wipe assembly during a tip wipe process. The controller moves the head assembly from the tip wipe assembly to the build location to resume the build process at the sacrificial tower such that the media dispensed immediately after the tip wipe process is used to build the sacrificial tower.

In another embodiment, a method of operating a fused filament fabrication (FFF) machine, as described above, having a head assembly with a filament dispenser for dispensing media through a liquefier tip is provided including fabricating a part in layers using the filament dispenser during a part fabricating process and fabricating a sacrificial tower for the part in layers using the filament dispenser during a sacrificial tower fabricating process. The method also includes cleaning the liquefier tip at a tip wipe assembly during a tip wipe process. The sacrificial tower fabricating process is performed prior to the part fabricating process after the tip wipe process.

The features and functions that have been discussed can be achieved independently in various embodiments or may be combined in yet other embodiments, further details of which can be seen with reference to the following description and drawings.

### BRIEF DESCRIPTION OF THE DRAWINGS

Figure 1 illustrates a fused filament fabrication (FFF) machine formed in accordance with an exemplary embodiment.
Figure 2 is a front perspective view of a head assembly of the FFF machine in accordance with an exemplary embodiment.
Figure 3 is a perspective view of a filament dispenser of the head assembly in accordance with an exemplary embodiment.
Figure 4 is a partial sectional view of the filament dispenser.
Figure 5 is a front perspective view of a workpiece fabricated using the FFF machine in accordance with an exemplary embodiment.
Figure 6 is a side view of a portion of the workpiece.
Figure 7 is a top view of the workpiece.
Figure 8 is a front view of the workpiece.
Figure 9 is a schematic illustration of a controller of the FFF machine in accordance with an exemplary embodiment.
Figure 10 is a flow chart of an embodiment of a method of operating a FFF machine in accordance with an exemplary embodiment.

### DETAILED DESCRIPTION

The following detailed description of certain embodiments will be better understood when read in conjunction with the appended drawings. It should be understood that the various embodiments are not limited to the arrangements and instrumentality shown in the drawings.

Various embodiments will be better understood when read in conjunction with the appended drawings. To the extent that the figures illustrate diagrams of the functional blocks of various embodiments, the functional blocks are not necessarily indicative of the division between hardware circuitry. Thus, for example, one or more of the functional blocks (e.g., processors, controllers or memories) may be implemented in a single piece of hardware (e.g., a general purpose signal processor or random access memory, hard disk, or the like) or multiple pieces of hardware. Similarly, any programs may be stand-alone programs, may be incorporated as subroutines in an operating system, may be functions in an installed software package, and the like. It should be understood that the various embodiments are not limited to the arrangements and instrumentality shown in the drawings.

As used herein, the terms "system," "unit," or "module" may include a hardware and/or software system that operates to perform one or more functions. For example, a module, unit, or system may include a computer processor, controller, or other logic-based device that performs operations based on instructions stored on a tangible and non-transitory computer readable storage medium, such as a computer memory. Alternatively, a module, unit, or system may include a hard-wired device that performs operations based on hard-wired logic of the device. The modules or units shown in the attached figures may represent the hardware that operates based on software or hardwired instructions, the software that directs hardware to perform the operations, or a combination thereof. The hardware may include electronic circuits that include and/or are connected to one or more logic-based devices, such as microprocessors, processors, controllers, or the like. These devices may be off-the-shelf devices that are appropriately programmed or instructed to perform operations described herein from the instructions described above. Additionally or alternatively, one or more of these devices may be hard-wired with logic circuits to perform these operations.

As used herein, an element or step recited in the singular and proceeded with the word "a" or "an" should be understood as not excluding plural of said elements or steps, unless such exclusion is explicitly stated. Furthermore, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

It should be noted that the particular arrangement of components (e.g., the number, types, placement, or the like) of the illustrated embodiments may be modified in various alternate embodiments. For example, in various embodiments, different numbers of a given module or unit may be employed, a different type or types of a given module or unit may be employed, a number of modules or units (or aspects thereof) may be combined, a given module or unit may be divided into plural modules (or sub-modules) or units (or sub-units), one or more aspects of one or more modules may be shared between modules, a given module or unit may be added, or a given module or unit may be omitted.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein. Instead, the use of "configured to" as used herein denotes structural adaptations or signals, and denotes structural requirements of any structure, limitation, or element that is described as being "configured to" perform the task or operation. For example, a processing unit, processor, or computer that is "configured to" perform a task or operation may be understood as being particularly structured to perform the task or operation (e.g., having one or more programs or instructions stored thereon or used in conjunction therewith tailored or intended to perform the task or operation, and/or having an arrangement of processing circuitry tailored or intended to perform the task or operation). For the purposes of clarity and the avoidance of doubt, a general purpose computer (which may become "configured to" perform the task or operation if appropriately programmed) is not "configured to" perform a task or operation unless or until specifically programmed or structurally modified to perform the task or operation.

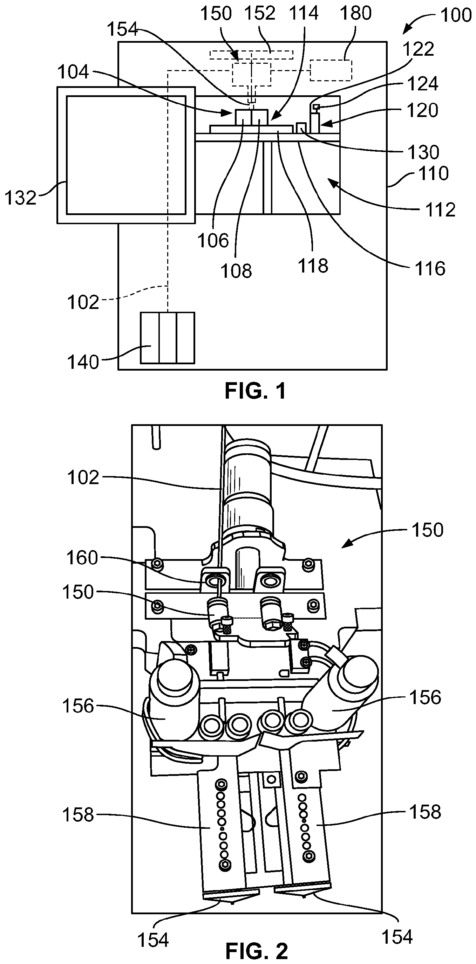

Figure 1 illustrates a fused filament fabrication (FFF) machine 100 formed in accordance with an exemplary embodiment. The FFF machine 100 uses a continuous filament 102 of a material, such as a thermoplastic material, to build a 3-D structure known as a workpiece 104. In an exemplary embodiment, the workpiece 104 includes a desired part 106 being built and a sacrificial tower 108 for the part 106 being built; however, some parts 106 may be built without the sacrificial tower 108. The sacrificial tower 108 may be used as a support for the part 106, built as an integral structure capable of being broken apart from the part 106 after fabrication. The sacrificial tower 108 supports the part 106 during the build process and is intended to be separated from the part 106 after the build process is complete and discarded. Optionally, the workpiece 104 may include multiple sacrificial towers 108 supporting different portions of the part 106. The use of the sacrificial tower 108 allows building of parts that could normally not be built using FFF techniques, such as building taller parts 106 or parts having a more complex shape. 3D printing allows for the design and build of parts 106 that cannot be made with traditional machining (such as subtractive processes). In other various embodiments, the sacrificial tower 108 is a stand-alone structure built near the part 106, such as adjacent but not touching the part or built spaced apart from the part 106, such as near the tip wipe assembly that receives sacrificial media, such as immediately after a tip wipe process. In such embodiments, the workpiece 104 is a multi-piece workpiece.

The FFF machine 100 includes a cabinet 110 defining a build chamber 112 for building the workpiece 104 at a build location 114 in the build chamber 112. In an exemplary embodiment, the FFF machine 100 includes a build platform 116, which is movable up and down in the build chamber 112. The build platform 116 supports a build sheet 118 that defines the build location 114. The build sheet 118 may be removably coupled to the build platform 116 and replaced, such as after completion of the build or when building a different type of part 106. The workpiece 104 is built on the top surface of the build sheet 118.

In an exemplary embodiment, the FFF machine 100 includes a tip wipe assembly 120 in the build chamber 112. The tip wipe assembly 120 cleans the dispensing tip used to dispense the material used to build the workpiece 104. The tip wipe assembly 120 may be fixed at a location in the build chamber 112, such as to a frame in the cabinet 110. Alternatively, the tip wipe assembly 120 may be mounted to the build platform 116 and movable with the build platform 116. In an exemplary embodiment, the tip wipe assembly 120 includes a scraper 122 and a brush 124. The scraper 122 and/or the brush 124 may remove debris, such as material buildup, from the dispenser during a tip wipe process.

Optionally, the FFF machine 100 includes a purge canister 130 that accepts material purge from the dispenser. In various embodiments, the purge canister 130 is positioned adjacent the tip wipe assembly 120. The purge canister 130 may be fixed at a location in the build chamber 112, such as to a frame in the cabinet 110. Alternatively, the purge canister 130 may be mounted to the build platform 116 and movable with the build platform 116. The purge canister 130 may be positioned near the tip wipe assembly 120 or near the build location 114.

The FFF machine 100 includes a door 132 opening and closing access to the build chamber 112. The door 132 may be handedly coupled to the cabinet 110. The door 132 may be sealed against the cabinet 110 in the closed position.

The FFF machine holds one or more filament canisters 140 each having a length of filament 102 therein. For example, the filament 102 may be arranged on a reel or spool in the filament canister 140. The filament 102 is continuously fed from the filament canister 140 during the build process.

The FFF machine 100 includes a head assembly 150 in the cabinet 110 for dispensing media at the build location 114 during the build process. The filament 102 is routed from the filament canister 140 to the head assembly 150, such as through tubing arranged in the cabinet 110. The head assembly 150 includes a positioning system 152 for positioning the head assembly 150 within the build chamber 112, such as relative to the build location 114, the tip wipe assembly 120, and the purge canister 130. The positioning system 152 may move the head assembly 150 in two dimensions (for example, horizontally) or in three dimensions (for example, horizontally and vertically). The positioning system 152 may be a belt driven, screw driven or otherwise movable, such as to slide the head assembly 150 along rails. Alternatively, the positioning system 152 may be a robotic arm positioning system movable in two or three dimensions. The FFF machine 100 includes a controller 180 operably coupled to the head assembly 150 to control the position of the head assembly 150 and dispensing of the media during the build process.

Figure 2 is a front perspective view of the head assembly 150 in accordance with an exemplary embodiment. In the illustrated embodiment, the head assembly 150 holds a pair of filament dispensers 154; however, the head assembly 150 may hold a single filament dispenser 154 or any number of filament dispensers 154. Optionally, each filament dispenser 154 may dispense a different filament 102. The different filaments 102 may have different properties, such as different thicknesses, different densities, different types of materials, different viscosities, different strengths, and the like.

The head assembly 150 includes a filament feed device 156 for each filament dispenser 154. The filament feed device 156 feeds the corresponding filament 102 to the filament dispenser 154. For example, the filament feed device 156 may be a feed wheel operated in one direction to advance the filament 102 and operated in the opposite direction to retract the filament 102. The filament feed device 156 may pull the filament 102 from the filament canister 140 (shown in figure 1).

The head assembly 150 includes a heater 158 for each filament dispenser 154, such as a thermocouple. The heater 158 heats the corresponding filament 102 for dispensing from the filament dispenser 154. For example, the filament 102 may be made molten or liquefied as the filament 102 passes through the heater. The temperature of the heater 158 may be controlled based on the feed rate of the filament 102. For example, the heater 158 may increase in temperature as the filament 102 is fed more quickly through the head assembly 150. In other various embodiments, the heater 158 has a static temperature while in use and may be off when not in use.

The head assembly 150 includes guide elements 160 to guide the filament 102 through the head assembly 150. Various guide elements 160 are fixed in place, such as rings. Other various guide elements 160 are flexible, such as guide tubes, and may be routed between the head assembly 150 and other components, such as the filament canister 140. The guide tubes are used to protect and direct the filament 102 through the machine. Optionally, dry air may be pumped through the tubes to limit moisture exposure of the filament 102.

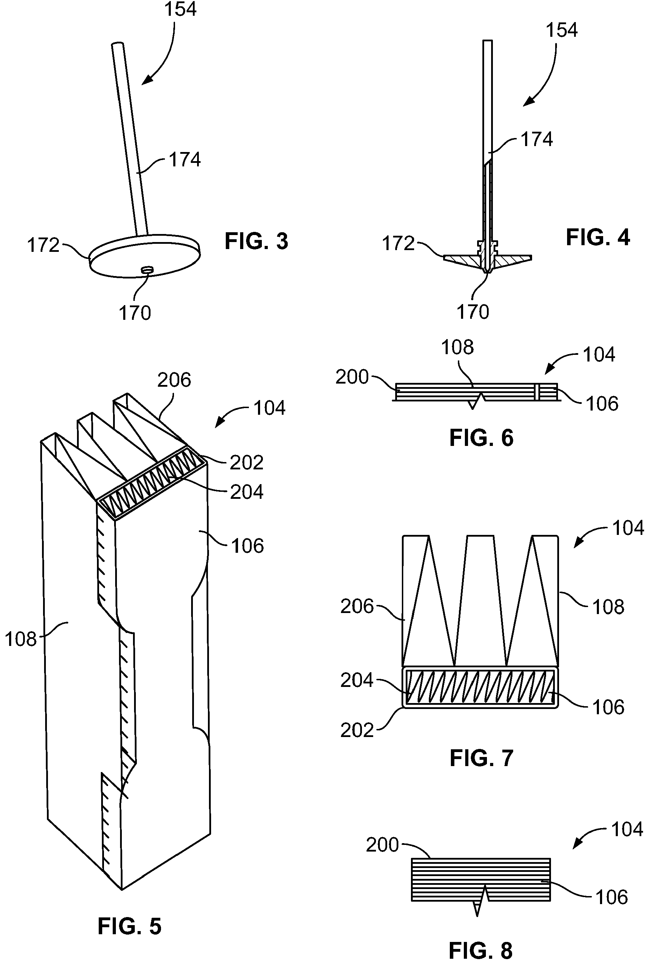

Figure 3 is a perspective view of the filament dispenser 154 in accordance with an exemplary embodiment. Figure 4 is a partial sectional view of the filament dispenser 154. The filament dispenser 154 includes a liquefier tip 170 at the bottom of the filament dispenser 154. A heat shield 172 is positioned below the liquefier tip 170 to protect the workpiece 104 from the heat generated by the liquefier tip 170. A feed tube 174 extends from the liquefier tip 170. The feed tube 174 passes through the heater 158 (shown in figure 2). The feed tube 174 may be heated by the heater 158. The liquefier tip 170 may be heated by the heater 158. The filament 102 is fed into the feed tube 174 from above and is fed through the feed tube 174 to the liquefier tip 170. The filament 102 is made molten and/or liquefied in the feed tube 174 and/or the liquefier tip 170. As the filament 102 is fed into the feed tube 174 from above, the material is forced from the bottom of the tip 170.

Figure 5 is a front perspective view of the workpiece 104 showing the desired part 106 and the sacrificial tower 108 used to support the part 106. Figure 6 is a side view of a portion of the workpiece 104. Figure 7 is a top view of the workpiece 104. Figure 8 is a front view of the workpiece 104. In the illustrated embodiment, the sacrificial tower 108 is shown connected to and supporting the part 106; however, in other various embodiments, one or more sacrificial towers 108 may be separate from (for example, remote from) the part 106. Using the FFF machine 100 allows the manufacture of complex parts, such as parts difficult to form using injection molding. For example, the part 106 may be made in a complex shape and avoid having welding joints. The FFF machine 100 is able to manufacture the part 106 and avoid tooling costs. The part 106 may be manufactured from lightweight materials.

In various embodiments, the part 106 may be an interior part, such as for an interior of an aircraft. For example, the part may be used for ducting, clips, brackets, filler blocks, and the like. The part 106 may have any desired shape. The sacrificial tower 108 has a complementary shape as the part 106 to lend support to the part 106 as the workpiece 104 is built up. The workpiece 102 may be made from any type of material, such as thermoplastic material, polycarbonate material, polyetherimide material, metal materials, and the like. The material may be selected for desired characteristics, such as strength, smoothness, flame and smoke tolerance, chemical resistance, toxicity requirements, and the like.

The workpiece 104 is built up in layers 200 the filament dispenser 154 (shown in figure 2) moves around the workpiece 104 to deposit the media in each layer 200 for moving on to the next layer 200. The filament 102 has a width and a thickness, which may be controlled by controlling the movement speed of the head assembly 150 and/or the feed rate of the filament 102, which may be tied to the drop distance of the build platform 116. In various embodiments, the layer 200 is fabricated by forming a contour 202, such as defining an outline or perimeter of the part 106, and then filling the contour 202 with raster 204; however the layer 200 may not include contours 202 and raster 204 in other various embodiments or may include only contours 202 without filling in with raster 204 in other various embodiments. In the illustrated embodiment, the part 106 is generally entirely filled in while the sacrificial tower 108 is generally hollow, being defined by support walls 206. The filament dispenser 154 may form any portion of the layer 200, in any order, in accordance with a build sequence of the controller 180. For example, the media may be first dispensed in the sacrificial tower 108 and later dispensed in the part 106 to form the complete layer 200. Alternatively, the filament dispenser 154 may build a portion of the sacrificial tower 108 and then a portion of the part 106 and then another proportion of the sacrificial tower 108, and possibly another portion of the part 106, and so on. In various embodiments, the entire sacrificial tower 108 is fabricated prior to the entire part 106 being fabricated for a given layer 200 before moving on to the next layer 200. In various embodiments, the entire contour 202 is fabricated prior to the raster 204.

After the tip wipe process, the build process resumes at the sacrificial tower 108, rather than the part 106, such that the sacrificial slug of media dispensed immediately after the tip wipe process is used to build the sacrificial tower 108 and is not used to build the part 106. For example, because the media in the filament dispenser 154 for the extended time of the tip wipe process may be compromised or inferior, such media is dispensed in the sacrificial tower 108 and does not form any portion of the finished part 106. The sacrificial tower 108 may be the supporting tower or may be a separate sacrificial tower 108 that is built separate on the build platform 116 such that the workpiece is fabricated in different pieces, some of which are sacrificial and intended to be discarded. In other various examples, rather than first dispensing into the sacrificial tower 108, the initial slug of material dispensed after the tip wipe process may be discarded into the purge canister 130 before resuming dispensing into the workpiece 104. In such embodiments, the workpiece 104 may be built without the sacrificial tower 108.

Optionally, multiple layers 200 may be fabricated between tip wipe processes. In an exemplary embodiment, the head assembly 150 completes building an entire layer 200 prior to initiating the tip wipe process, rather than initiating the tip wipe process in the middle of building one of the layers 200. In various embodiments, if the tip wipe process is initiated in the middle of building one of the layers 200, the build sequence ensures that the breakpoint when the head assembly 150 leaves the workpiece 104 is during dispensing of the sacrificial tower 108 rather than the part 106.

Returning to Figures 1 and 2, the FFF machine 100 is shown with the filament dispensers 154 in the build location 114 for building the part 106 and the sacrificial tower 108 of the workpiece 104. The controller 180 controls the position of the head assembly 150 for dispensing of the media during the build process. The controller 180 periodically moves the head assembly 150 away from the build location 114 to the tip wipe assembly 120 to clean the liquefier tip 170 at the tip wipe assembly 120 during the tip wipe process. The controller 180 then moves the head assembly 150 from the tip wipe assembly 120 to the build location 114 to resume the build process at the sacrificial tower 108 such that the sacrificial slug of media dispensed immediately after the tip wipe process is used to build the sacrificial tower 108. The sacrificial slug of material is the material that is in the liquefier tip 170 during the tip wipe process, which is subjected to heating during the travel time to and from the tip wipe assembly 120. The sacrificial slug of media is not used to build the part, but may be purged, dispensed in the sacrificial tower 108 or otherwise dispensed separate from the part 106. In various embodiments, the head assembly 150 builds multiple layers 200 of the part 106 and the sacrificial tower 108 between tip wipe processes. In an exemplary embodiment, the controller 180 initiates the tip wipe process at the completion of one of the layers 200 and the controller 180 resumes the build process at the start of a new layer 200. Optionally, at least some of the media in the liquefier tip 170 may be purged in the purge canister 130 either during or after the tip wipe process.

The media dispensed immediately after the tip wipe process is not used to build the part. For example, substantially all of the media in the liquefier tip 170 and the feed tube 174, during the tip wipe process, is dispensed prior to building the part 108. In various embodiments, substantially all of the media in the liquefier tip 170 and the feed tube 174 heated by the heater during the tip wipe process is dispensed in the sacrificial tower 108. In other various embodiments of the present disclosure, substantially all of the media in the liquefier tip 170 and the feed tube 174 heated by the heater during the tip wipe process is dispensed in the purge canister 130 remote from the part 106 and from the sacrificial tower 108.

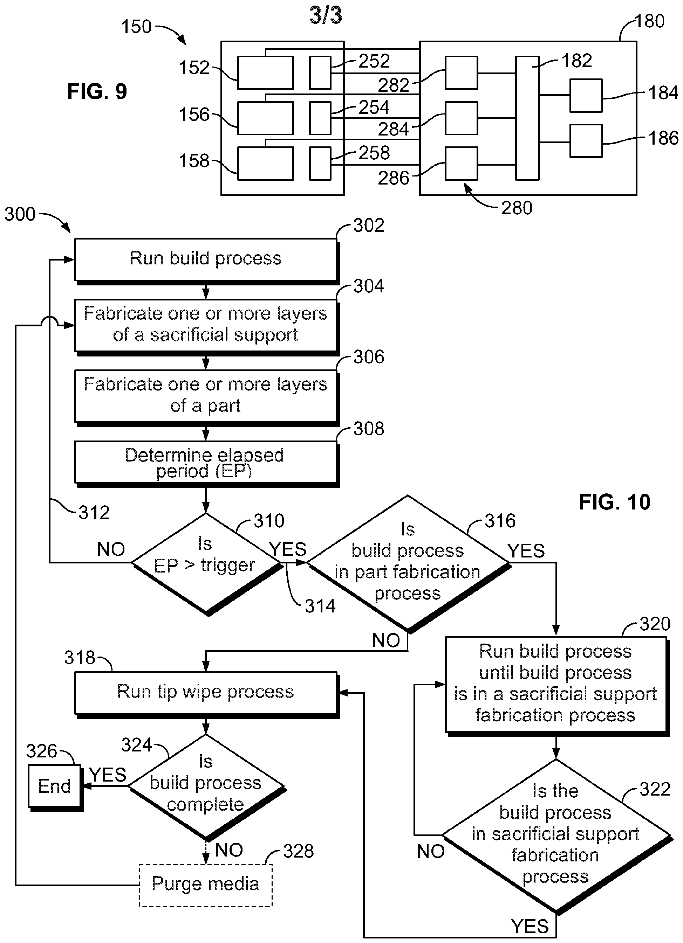

Figure 9 is a schematic illustration of the controller 180 in accordance with an exemplary embodiment. The controller 180 is operably coupled to the head assembly 150 and outputs control signals for controlling one or more components of the head assembly 150. For example, the controller 180 is operably coupled to the positioning system 152 of the head assembly 150. The controller 180 controls the position of the filament dispenser 154 by operating the positioning system 152 to move the filament dispenser 154. The controller 180 is operably coupled to the filament feed device 156 of the head assembly 150. The controller 180 controls the feed rate of the filament 102 by operating the filament feed device 156. The controller 180 is operably coupled to the heater 158 of the head assembly 150. The controller 180 controls the temperature of the heater 158 for heating the media.

In various embodiments, the controller 180 includes a microprocessor 182 for controlling one or more aspects of the FFF machine 100. The controller 180 includes a memory 184 for receiving and/or storing programs or other data for controlling one or more aspects of the FFF machine 100. For example, the memory 184 may store build sequences for the build process. The controller 180 includes a user interface 186 for receiving input from a user for controlling one or more aspects of the FFF machine 100.

In an exemplary embodiment, the controller 180 receives inputs from the head assembly 150. For example, the head assembly 150 may include one or more sensors sending signals to the controller 180. In various embodiments, the head assembly 150 includes a position sensor 252 identifying a position of the head assembly 150, such as of the filament dispenser 154. The positions sensor 252 may be a linear sensor, an angular sensor, a multi-axis sensor, a GPS sensor, a proximity sensor, a displacement sensor, a visual sensor, and the like. In various embodiments, the head assembly 150 includes a camera 254 for providing visual feedback for vision guidance of the head assembly 150 by the controller 180. In various embodiments, the head assembly 150 includes a temperature sensor 258 identifying a temperature of the heater, of the liquefier tip 170 and/or of the media. Other types of sensors may be coupled to the controller 180 for providing data to the controller 180 for operating the FFF machine 100.

The controller 180 includes one or more control modules 280 having one or more units for performing various tasks for operating the FFF machine 100. It should be noted that the various embodiments may be implemented in hardware, software or a combination thereof The various embodiments and/or components of the controller, for example, the modules, or units and components therein, also may be implemented as part of one or more computers or processors. The computer(s) or processor(s) of the controller may include a computing device, an input device, a display unit and an interface, for example, for accessing the Internet. The computer or processor may include a microprocessor. The microprocessor may be connected to a communication bus. The computer or processor may also include a memory. The memory may include Random Access Memory (RAM) and Read Only Memory (ROM). The computer or processor further may include a storage device, which may be a hard disk drive or a removable storage drive such as a solid state drive, optic drive, and the like. The storage device may also be other similar means for loading computer programs or other instructions into the computer or processor.

As used herein, the term "computer," "controller," and "module" may each include any processor-based or microprocessor-based system including systems using microcontrollers, reduced instruction set computers (RISC), application specific integrated circuits (ASICs), logic circuits, GPUs, FPGAs, and any other circuit or processor capable of executing the functions described herein. The above examples are exemplary only, and are thus not intended to limit in any way the definition and/or meaning of the term "module" or "computer".

The computer, module, or processor executes a set of instructions that are stored in one or more storage elements, in order to process input data. The storage elements may also store data or other information as desired or needed. The storage element may be in the form of an information source or a physical memory element within a processing machine.

The set of instructions may include various commands that instruct the computer, module, or processor as a processing machine to perform specific operations such as the methods and processes of the various embodiments described and/or illustrated herein. The set of instructions may be in the form of a software program. The software may be in various forms such as system software or application software and which may be embodied as a tangible and non-transitory computer readable medium. Further, the software may be in the form of a collection of separate programs or modules, a program module within a larger program or a portion of a program module. The software also may include modular programming in the form of object-oriented programming. The processing of input data by the processing machine may be in response to operator commands, or in response to results of previous processing, or in response to a request made by another processing machine.

As used herein, the terms "software" and "firmware" are interchangeable, and include any computer program stored in memory for execution by a computer, including RAM memory, ROM memory, EPROM memory, EEPROM memory, and non-volatile RAM (NVRAM) memory. The above memory types are exemplary only, and are thus not limiting as to the types of memory usable for storage of a computer program. The individual components of the various embodiments may be virtualized and hosted by a cloud type computational environment, for example to allow for dynamic allocation of computational power, without requiring the user concerning the location, configuration, and/or specific hardware of the computer system.

In various embodiments, the controller 180 includes a positioning unit 282 having one or more programs for controlling a position of the head assembly 150. The controller 180 includes a build unit 284 having one or more programs for generating, storing or otherwise controlling a build sequence for building the part 106 and the sacrificial tower 108 in the various layers 200. The controller 180 includes a tip wipe unit 286 having one or more programs for generating, storing or otherwise controlling the tip wipe process. The tip wipe unit 286 provides a control sequence (for example, for control of the positioning unit 282 during the tip wipe processes) for the positioning unit 282. The build unit 284 provides a control sequence (for example, for control of the positioning unit 282, during the build processes) for the positioning unit 282. The control sequence provided by the tip wipe unit 286 periodically interrupts the control sequence provided by the build unit 284 to cause the positioning unit 282 to move the head assembly 150 to the tip wipe assembly 120 to perform the tip wipe process and then move the head assembly 150 back to the build location 114. The build unit 284 causes the positioning unit 282 to move the head assembly 150 to the sacrificial tower 108 to reinitiate dispensing of the media at the sacrificial tower 108 after the tip wipe process prior to moving the head assembly 150 to the part 106 such that the media dispensed immediately after the tip wipe process is used to build the sacrificial tower 108.

The tip wipe sequence may be part of the build sequence in various embodiments. The build sequence identifies the position of the head assembly 150 as well as controlling feeding of the filament and heating of the filament for building the workpiece 104. The build sequence controls building of the part 106 as well as the sacrificial tower 108, including the timing of building the part 106 compared to the sacrificial tower 108 for the given layers 200. The build sequence controls the shape, thickness and width of the contour 202 and the raster 204.

In an exemplary embodiment, the build sequence identifies predetermined breaks for performing the tip wipe processes. The breaks may occur after a predetermined time, such as requiring that the break occurs within an M second interval after N seconds after initiating the current build process. For example, the build sequence may require that the break occur within 60 seconds after 1800 seconds after the current build process (for example, after the last tip wipe process); however other times are possible in alternative embodiments, such as more or less flexible time and/or more or less time between tip wipe processes. In an exemplary embodiment, the predetermined breaks for the tip wipe process occurring during building of the sacrificial tower 108 rather than during building of the part 106. In various embodiments, the build sequence may ensure that the breaks between build processes for tip wiping occur at the end of building a layer 200. As such, the next build process resumes at the start of a new layer 200, rather than in the middle of building a layer 200.

Figure 10 is a flow chart of an embodiment of a method 300 of operating a fused filament fabrication (FFF) machine having a head assembly with a filament dispenser for dispensing media through a liquefier tip to build a workpiece. The method 300, for example, may employ or be performed by structures or aspects of various embodiments discussed herein. In various embodiments, certain operations may be omitted or added, certain operations may be combined, certain operations may be performed simultaneously, certain operations may be performed concurrently, certain operations may be split into multiple operations, certain operations may be performed in a different order, or certain operations or series of operations may be re-performed in an iterative fashion. In various embodiments, portions, aspects, and/or variations of the method 300 may be able to be used as one or more algorithms to direct hardware to perform one or more operations described herein.

Beginning at 302, the FFF machine runs a build process for building a part in a sacrificial tower for the part in a plurality of layers. The build process is performed in accordance with a build sequence which may be stored or generated by a controller of the FFF machine. For example, the build sequence may be downloaded or uploaded to the FFF machine and stored in memory, such as from a CAD file. In other various embodiments, the build sequence may be generated by the controller by a build unit of the controller. For example, the build unit may generate the build sequence based on the size and shape of the desired part.

At 304, the FFF machine fabricates one or more layers of a sacrificial tower for the part during a sacrificial tower fabrication process. The FFF machine fabricates the layers of the sacrificial tower by dispensing a bead or filament of media from a filament dispenser of a head assembly. The controller controls the position of the head assembly as the media is dispensed to build each layer of the sacrificial tower.

At 306, the FFF machine fabricates one or more layers of a part during a part fabrication process. The FFF machine fabricates the layers of the part by dispensing a bead or filament of media from a filament dispenser of a head assembly. The controller controls the position of the head assembly as the media is dispensed to build each layer of the part. In an exemplary embodiment, the FFF machine alternates between the sacrificial tower fabrication process and the part fabrication process within or between each of the layers. For example, the head assembly may dispense the media to build some or all of one of the layers of the sacrificial tower before continuing to dispense the media to build some or the entire corresponding layer of the part. In other various embodiments, the head assembly may dispense media to build some or all of one of the layers of the part before continuing to dispense the media to build some or the entire corresponding layer of the sacrificial tower. During the build process, any number of layers of the workpiece may be built before the filament dispenser 154 needs to be cleaned by a tip wipe process.

At 308, the FFF machine determines an elapsed period since the start of the current build process or since the previous tip wipe process. The elapsed period may be an elapsed time (for example, xxx seconds), a number of layers built (for example, xxx layers), an amount of material consumed (for example, xxx meters of material dispensed), or another metric. At 310, the FFF machine compares the elapsed period to a tip wipe trigger. If the elapsed period is less than the tip wipe trigger, then the FFF machine continues to run the build process by proceeding along 312. However, if the elapsed period is greater than the tip wipe trigger, then the FFF machine may begin to initiate the tip wipe process at 314. In various embodiments, when the tip wipe process is initiated, the FFF machine may continue to run the build process until the current layer of the workpiece is complete.

At 316, the FFF machine determines if the build process is in the part fabrication process. If the build process is not in the part fabrication process, but rather is in the sacrificial tower fabrication process or is transitioning between the part fabrication process and the sacrificial tower fabrication process, the FFF machine runs a tip wipe process at 318 cleaning a liquefier tip at a tip wipe assembly. However, if the build process is in the part fabrication process, the FFF machine continues to run the build process until the build process is in the sacrificial tower fabrication process at 320. The FFF machine determines if the build process is in the sacrificial tower fabrication process at 322. If not, then the FFF machine continues to run the build process at 320. However, when the FFF machine determines that the build process is in the sacrificial tower fabrication process, the FFF machine runs the tip wipe process at 318.

After the tip wipe process, at 324, the FFF machine determines if the build process is complete. If the build process is complete, the processes ended at 326. However, if the build process is not complete, the FFF machine may optionally initiate a purge at 328 and/or return to running the build process by fabricating the sacrificial tower at 304. The sacrificial tower fabricating process is performed prior to the part fabricating process after the tip wipe process such that the media dispensed immediately after the tip wipe process is used to build the sacrificial tower rather than building the part.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from the scope thereof. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the various embodiments should, therefore, be determined with reference to the appended claims.

## Claims

1. A fused filament fabrication machine (100) comprising:
a cabinet (110) defining a build chamber (112) for building a workpiece (104), including a part (106) and a sacrificial tower (108) for the part (106), at a build location (114); a head assembly (150) in the cabinet (110) for dispensing media at the build location (114) during a build process, the head assembly (150) having a filament dispenser (154) for dispensing the media through a liquefier tip (170) of the filament dispenser (154);
a tip wipe assembly (120) in the cabinet (110) remote from the build location (114); and
a controller (180) operably coupled to the head assembly (150) to control the position of the head assembly (150) and dispensing of the media during the build process, the controller (180) periodically moving the head assembly (150) away from the build location (114) to the tip wipe assembly (120) to clean the liquefier tip (170) at the tip wipe assembly (120) during a tip wipe process, the controller (180) being configured to move the head assembly (150) from the tip wipe assembly (120) to dispense a sacrificial slug of material separate from the part (106) after the tip wipe process before deposition of the media into the part (106),
wherein the controller (180) is configured to move the head assembly (150) away from the tip wipe assembly (120) to the build location (114) to resume the build process at the sacrificial tower (108) such that the media dispensed immediately after the tip wipe process is used to build the sacrificial tower (108) rather than the part (106).

2. The machine (100) of claim 1, wherein the media dispensed immediately after the tip wipe process is not used to build the part (106).

3. The machine (100) of any of claims 1 to 2, wherein substantially all of the media in the liquefier tip (170) during the tip wipe process is dispensed in the sacrificial tower (108) as the sacrificial slug.

4. The machine (100) of any of claims 1 to 3, wherein the controller (180) initiates the tip wipe process at the completion of a layer (200) of the part 106 and the controller (180) resumes the build process at the start of a new layer (200).

5. The machine (100) of any of claims 1 to 4, wherein the filament dispenser (104) includes the liquefier tip (170) and a feed tube (174) routed through a heater (158), substantially all of the media in the liquefier tip (170) and the feed tube (174) heated by the heater (158) during the tip wipe process is dispensed from the filament dispenser (154) prior to building the part (106).

6. The machine (100) of any of claims 1 to 5, wherein the head assembly (150) builds multiple layers (200) of the part (106) and the sacrificial tower (108) between tip wipe processes.

7. The machine (100) of any of claims 1 to 6, wherein the head assembly (150) completes building the corresponding layer (200) of the part (106) prior to initiating the tip wipe process.

8. The machine (100) of any of claims 1 to 7, wherein the head assembly (150) includes a positioning system (152) supporting and moving the filament dispenser (154) in the build location (114), to the tip wipe assembly (120), and back to the build location (114).

9. The machine (100) of any of claims 1 to 8, wherein the controller (180) includes a build unit (284) storing a program for controlling a build sequence for building the part (106) and the sacrificial tower (108) in layers (200), the build sequence having predetermined breaks for performing the tip wipe processes, the predetermined breaks occurring during building of the sacrificial tower (108) rather than during building of the part (106).

10. A method of operating a fused filament fabrication machine (100) according to one of the proceeding claims having a head assembly (150) with a filament dispenser (154) for dispensing media through a liquefier tip (170) to build a workpiece (104) during a build process, the method comprising:
fabricating a sacrificial tower (108) for the part (106) in layers (200) using the filament dispenser (154) during a sacrificial tower fabricating process;
fabricating a part (106) in layers (200) using the filament dispenser (154) during a part fabricating process; and
cleaning the liquefier tip (170) at a tip wipe assembly (120) during a tip wipe process, wherein the sacrificial tower fabricating process is performed prior to the part fabricating process, and after the tip wipe process.

11. The method of claim 10, further comprising returning to the workpiece (104) and continuing to fabricate the sacrificial tower (108) after the tip wipe process.

12. The method of claim 11, further comprising continuing to fabricate the part (106) after the tip wipe process only after continuing to fabricate the sacrificial tower (108).

13. The method of any of claims 10-12, further comprising breaking the build process of the workpiece (104) for the tip wipe process only when not fabricating the part (106).

14. The method of any of claims 10-13, further comprising breaking the build process of the workpiece (104) for the tip wipe process only immediately after completion of one of the layers (200) of the workpiece (104).

## Patentansprüche

1. Schmelzfadenherstellungsmaschine (100), die aufweist:
ein Gehäuse (110), das eine Herstellungskammer (112) zum Herstellen eines Werkstücks (104) einschließlich eines Teils (106) und eines Opferturms (108) für das Teil (106) an einem Herstellungsort (114) definiert; eine Kopfanordnung (150) in dem Gehäuse (110) zum Ausgeben eines Mediums am Herstellungsort (114) während eines Herstellungsvorgangs, wobei die Kopfanordnung (150) eine Fadenausgabeeinrichtung (154) zum Ausgeben des Mediums durch eine Verflüssigungsspitze (170) der Fadenausgabeeinrichtung (154) aufweist;
eine Spitzenabstreifanordnung (120) in dem Gehäuse (110) entfernt zum Herstellungsort (114); und
eine Steuereinrichtung (180), die betriebsfähig an die Kopfanordnung (150) gekoppelt ist, um die Position der Kopfanordnung (150) und ein Ausgeben des Mediums während des Herstellungsvorgangs zu steuern, wobei die Steuereinrichtung (180) periodisch die Kopfanordnung (150) von dem Herstellungsort (114) zur Spitzenabstreifanordnung (120) bewegt, um die Verflüssigungsspitze (170) bei der Spitzenabstreifanordnung (120) während eines Spitzenabstreifvorgangs zu reinigen, wobei die Steuereinrichtung (180) eingerichtet ist, die Kopfanordnung (150) von der Spitzenabstreifanordnung (120) um eine Opfermenge eines Material separat von dem Teil (106) nach dem Spitzenabstreifvorgang vor einer Abgabe des Mediums in das Teil (106) auszugeben,
wobei die Steuereinrichtung (180) eingerichtet ist, die Kopfanordnung (150) von der Spitzenabstreifanordnung (120) zum Herstellungsort (114) weg zu bewegen, um den Herstellungsvorgang bei dem Opferturm (108) derart wieder aufzunehmen, dass das Medium, welches unmittelbar nach dem Spitzenabstreifvorgang ausgegeben wird, zum Herstellen des Opferturms (108) anstatt des Teils (106) verwendet wird.

2. Maschine (100) nach Anspruch 1, wobei das Medium, das unmittelbar nach dem Spitzenabstreifvorgang ausgegeben wird, nicht zum Herstellen des Teils (106) verwendet wird.

3. Maschine (100) nach einem der Ansprüche 1 bis 2, wobei im Wesentlichen das gesamte Medium in der Verflüssigungsspitze (170) während des Spitzenabstreifvorgangs in den Opferturm (108) als die Opfermenge ausgegeben wird.

4. Maschine (100) nach einem der Ansprüche 1 bis 3, wobei die Steuereinrichtung (180) den Spitzenabstreifvorgang bei der Beendigung einer Schicht (200) des Teils (106) beginnt und die Steuereinrichtung (180) den Herstellungsvorgang zu Beginn einer neuen Schicht (200) wieder aufnimmt.

5. Maschine (100) nach einem der Ansprüche 1 bis 4, wobei die Fadenausgabeeinrichtung (104) die Verflüssigungsspitze (170) und eine Zuführleitung (174) umfasst, die durch eine Erwärmungseinrichtung (158) geleitet wird, wobei im Wesentlichen das gesamte Medium in der Verflüssigungsspitze (170) und in der Zuführleitung (174) durch die Erwärmungseinrichtung (158) erwärmt wird, während der Spitzenabstreifvorgang aus der Fadenausgabeeinrichtung (154) vor einem Herstellen des Teils (106) ausgegeben wird.

6. Maschine (100) nach einem der Ansprüche 1 bis 5, wobei die Kopfanordnung (150) mehrere Schichten (200) des Teils (106) und des Opferturms (108) zwischen Spitzenabstreifvorgängen herstellt.

7. Maschine (100) nach einem der Ansprüche 1 bis 6, wobei die Kopfanordnung (150) ein Herstellen der entsprechenden Schicht (200) des Teils (106) vor einem Beginnen des Spitzenabstreifvorgangs beendet.

8. Maschine (100) nach einem der Ansprüche 1 bis 7, wobei die Kopfanordnung (150) ein Positionierungssystem (152) umfasst, das die Fadenausgabeeinrichtung (154) am Herstellungsort (114) zur Spitzenabstreifanordnung (120) und zurück zum Herstellungsort (114) bewegt und hält.

9. Maschine (100) nach einem der Ansprüche 1 bis 8, wobei die Steuereinrichtung (180) eine Herstellungseinheit (284) umfasst, die ein Programm zum Steuern einer Herstellungssequenz zum Herstellen des Teils (106) und des Opferturms (108) in Schichten (200) speichert, wobei die Herstellungssequenz vorherbestimmte Pausen zum Durchführen der Spitzenabstreifvorgänge aufweist, wobei die vorbestimmten Pausen während eines Herstellens des Opferturms (108) anstatt während eines Herstellens des Teils (106) auftreten.

10. Verfahren zum Herstellen einer Schmelzfadenherstellungsmaschine (100) gemäß einem der vorhergehenden Ansprüche, die eine Kopfanordnung (150) mit einer Fadenausgabeeinrichtung (154) zum Ausgeben eines Mediums durch eine Verflüssigungsspitze (170) zum Herstellen eines Werkstücks (104) während eines Herstellungsvorgangs aufweist, wobei das Verfahren aufweist:
Herstellen eines Opferturms (108) für das Teil (106) in Schichten (200) unter Verwendung der Fadenausgabeeinrichtung (154) während eines Opferturmherstellungsvorgangs;
Herstellen eines Teils (106) in Schichten (200) unter Verwendung der Fadenausgabeeinrichtung (154) während eines Teileherstellungsvorgangs; und
Reinigen der Verflüssigungsspitze (170) bei einer Spitzenabstreifanordnung (120) während eines Spitzenabstreifvorgangs, wobei der Opferturmherstellungsvorgang vor dem Teileherstellungsvorgang und nach dem Spitzenabstreifvorgang durchgeführt wird.

11. Verfahren nach Anspruch 10, das ferner ein Zurückkehren zum Werkstück (104) und ein Fortsetzen aufweist, um den Opferturm (108) nach dem Spitzenabstreifvorgang herzustellen.

12. Verfahren nach Anspruch 11, das ferner ein Fortsetzen des Herstellens des Teils (106) nach dem Spitzenabstreifvorgang aufweist, nur nach einem Fortsetzen des Herstellens des Opferturms (108).

13. Verfahren nach einem der Ansprüche 10-12, das ferner ein Unterbrechen des Herstellungsvorgangs des Werkstücks (104) für den Spitzenabstreifvorgang lediglich dann aufweist, wenn das Teil (106) nicht hergestellt wird.

14. Verfahren nach einem der Ansprüche10-13, das ferner ein Unterbrechen des Herstellungsvorgangs des Werkstücks (104) für den Spitzenabstreifvorgang lediglich unmittelbar nach einem Abschluss von einer der Schichten (200) des Werkstücks (104) aufweist.

## Revendications

1. Machine d'impression par dépôt de fil fondu (100) comprenant :
une chambre (110) définissant une chambre de construction (112) pour construire une pièce à usiner (104), comprenant une pièce (106) et une tour sacrificielle (108) pour la pièce (106), à un emplacement de construction (114) ; un ensemble de tête (150) dans la chambre (110) pour distribuer un milieu à l'emplacement de construction (114) pendant un processus de construction, l'ensemble de tête (150) ayant un distributeur de fils (154) pour distribuer le milieu à travers une pointe de liquéfacteur (170) du distributeur de fils (154) ;
un ensemble d'essuyage de pointe (120) dans la chambre (110) à distance de l'emplacement de construction (114) ; et
un dispositif de commande (180) accouplé de manière opérationnelle à l'ensemble de tête (150) pour commander la position de l'ensemble de tête (150) et la distribution du milieu pendant le processus de construction, le dispositif de commande (180) déplaçant périodiquement l'ensemble de tête (150) de l'emplacement de construction (114) vers l'ensemble d'essuyage de pointe (120) pour nettoyer la pointe de liquéfacteur (170) au niveau de l'ensemble d'essuyage de pointe (120) pendant un processus d'essuyage de pointe, le dispositif de commande (180) étant conçu pour déplacer l'ensemble de tête (150) à partir de l'ensemble d'essuyage de pointe (120) pour distribuer une galette sacrificielle de matériau séparé de la pièce (106) après le processus d'essuyage de pointe avant dépôt du milieu dans la pièce (106),
le dispositif de commande (180) étant conçu pour déplacer l'ensemble de tête (150) de l'ensemble d'essuyage de pointe (120) vers l'emplacement de construction (114) pour reprendre le processus de construction au niveau de la tour sacrificielle (108) de sorte que le milieu distribué immédiatement après le processus d'essuyage de pointe soit utilisé pour construire la tour sacrificielle (108) plutôt que la pièce (106).

2. Machine (100) selon la revendication 1, le milieu distribué immédiatement après le processus d'essuyage de pointe n'étant pas utilisé pour fabriquer la pièce (106).

3. Machine (100) selon la revendication 1 ou 2, sensiblement tout le milieu dans la pointe de liquéfacteur (170) étant distribué dans la tour sacrificielle (108) en tant que galette sacrificielle pendant le processus d'essuyage de pointe.

4. Machine (100) selon l'une quelconque des revendications 1 à 3, le dispositif de commande (180) lançant le processus d'essuyage de pointe une fois terminée une couche (200) de la pièce (106) et le dispositif de commande (180) reprenant le processus de construction au début d'une nouvelle couche (200).

5. Machine (100) selon l'une quelconque des revendications 1 à 4, le distributeur de fils (104) comprenant la pointe de liquéfacteur (170) et un tube d'alimentation (174) acheminés à travers un dispositif de chauffage (158), sensiblement la totalité du milieu dans la pointe de liquéfacteur (170) et le tube d'alimentation (174) chauffé par le dispositif de chauffage (158) pendant le processus d'essuyage de pointe étant distribuée à partir du distributeur de fils (154) avant la construction de la pièce (106).

6. Machine (100) selon l'une quelconque des revendications 1 à 5, l'ensemble de tête (150) construisant plusieurs couches (200) de la pièce (106) et la tour sacrificielle (108) entre des processus d'essuyage de pointe.

7. Machine (100) selon l'une quelconque des revendications 1 à 6, l'ensemble de tête (150) terminant la construction de la couche (200) correspondante de la pièce (106) avant de lancer le processus de nettoyage de pointe.

8. Machine (100) selon l'une quelconque des revendications 1 à 7, l'ensemble de tête (150) comprenant un système de positionnement (152) supportant et déplaçant le distributeur de fils (154) dans l'emplacement de construction (114), vers l'ensemble d'essuyage de pointe (120), et de retour à l'emplacement de construction (114).

9. Machine (100) selon l'une quelconque des revendications 1 à 8, le dispositif de commande (180) comprenant une unité de construction (284) stockant un programme pour commander une séquence de construction pour construire la pièce (106) et la tour sacrificielle (108) en couches (200), la séquence de construction ayant des interruptions prédéfinies pour effectuer les processus d'essuyage de pointe, les interruptions prédéfinies survenant pendant la construction de la tour sacrificielle (108) plutôt que pendant la construction de la pièce (106).

10. Procédé de fonctionnement d'une machine d'impression par dépôt de fil fondu (100) selon l'une des revendications précédentes ayant un ensemble de tête (150) ayant un distributeur de fils (154) pour distribuer un milieu à travers une pointe de liquéfacteur (170) pour construire une pièce à usiner (104) pendant un processus de construction, le procédé comprenant les étapes consistant à :
fabriquer une tour sacrificielle (108) pour la pièce (106) en couches (200) au moyen du distributeur de fils (154) pendant un processus de fabrication de tour sacrificielle ;
fabriquer une pièce (106) en couches (200) au moyen du distributeur de fils (154) pendant un processus de fabrication de pièce ; et
nettoyer la pointe de liquéfacteur (170) au niveau d'un ensemble d'essuyage de pointe (120) pendant un processus d'essuyage de pointe, le processus de fabrication de tour sacrificielle étant effectué avant le processus de fabrication de pièce, et après le processus d'essuyage de pointe.

11. Procédé selon la revendication 10, comprenant en outre les étapes consistant à retourner à la pièce à usiner (104) et à poursuivre la fabrication de la tour sacrificielle (108) après le processus d'essuyage de pointe.

12. Procédé selon la revendication 11, comprenant en outre l'étape consistant à poursuivre la fabrication de la pièce (106) après le processus d'essuyage de pointe seulement après avoir continué la fabrication de la tour sacrificielle (108).

13. Procédé selon l'une quelconque des revendications 10 à 12, comprenant en outre l'étape consistant à interrompre le processus de construction de la pièce à usiner (104) pour le processus d'essuyage de pointe uniquement lorsque la pièce (106) n'est pas en cours de fabrication.

14. Procédé selon l'une quelconque des revendications 10 à 13, comprenant en outre l'étape consistant à interrompre le processus de construction de la pièce à usiner (104) pour le processus d'essuyage de pointe seulement immédiatement après l'achèvement de l'une des couches (200) de la pièce à usiner (104).
